# FASCICULE DE BREVET EUROPEEN

(11) **EP 0 406 063 B1**
(45) Date de publication et mention de la délivrance du brevet: **22.09.1993**
(21) Numéro de dépôt: 90401728.2
(22) Date de dépôt: 19.06.1990
(51) Int. Cl.: E01C 11/22, A01G 1/08

(54) **Pavé en matière synthétique et bordure d'accotement constituée par de tels pavés**
Synthetischer Pflasterstein und Kantenstütze aus diesen Steinen hergestellt
Synthetic paving element and kerbedging made of these elements

(30) Priorité: 28.06.1989 FR 8908610
(43) Date de publication de la demande: 02.01.1991
(73) Titulaire: ALLIBERT MANUTENTION, F-92521 Neuilly-sur-Seine (FR)
(72) Inventeur: Tognetti, Daniel, F-95680 Montlignon (FR)
(74) Mandataire: Lerner, François

(56) Documents cités:
- CH-A- 535 328
- DE-A- 2 001 740
- DE-A- 2 024 659
- GB-A- 2 172 639
- US-A- 3 676 952
- US-A- 4 761 923

## Description

L'invention concerne un pavé moulé en matière synthétique destiné à former l'un des éléments d'une chaine propre à constituer une bordure d'accotement, telle qu'une bordure de trottoir ou de terre-plein.

L'invention se rapporte également à la bordure ainsi réalisée.

Actuellement et d'une manière classique, les bordures d'accotement sont en général réalisées à partir d'une série de pavés en pierre ou en béton et ces pavés sont placés bord à bord, les uns à la suite des autres,pour être scellés au sol.

Il est clair qu'une telle construction de bordure impose des travaux relativement longs et pénibles nécessitant la création de chantiers relativement importants, bien souvent gênants pour la circulation.

En outre, ces bordures sont prévues pour être installées à demeure, le poids des pavés et la mise en place de ces mêmes bordures interdisant leur installation temporaire.

Parmi les publications antérieures, il existe, certes, le brevet US-A-3 676 952 qui décrit un élément de bordure de pelouse pouvant être accolé à un trottoir.

Mais il s'agit là d'une structure en profilés ouverts, à ficher en terre, donc devant être disposée en un endroit où le sol soit tel que cette structure puisse y être enfoncée.

En outre, la structure décrite est réalisée de manière que ces profilés forment une bande avec, d'endroits en endroits, des zones triangulées permettant de plier sensiblement à angle "vif", sans courbure, ladite bande, par exemple pour épouser le contour de la pelouse à border. La structure n'est donc notamment pas adaptée aux trottoirs à bordure arrondie. En outre, sa matière de constitution est indiquée comme étant de préférence métallique, et doit de toutes façons être suffisamment rigide pour permettre de ficher la structure en terre.

La structure en question n'est donc pas adaptée à la réalisation projetée dans l'invention de bordures d'accotements provisoires, de sécurité, pour des voies de circulation en cours de construction ou de réfection.

L'invention a notamment pour objet d'apporter une solution à tous les problèmes évoqués ci-dessus.

A cet effet, elle propose un pavé en matière synthétique à disposer sur le sol, le pavé présentant une forme allongée et comportant au moins deux blocs situés chacun vers une de ses extrémités longitudinales, lesdits blocs étant reliés entre-eux par au moins une partie déformable formée d'une seule pièce avec les blocs et constituant une zone possible de cintrage propre à donner à volonté au pavé une forme générale indifféremment rectiligne ou cintrée.

Grâce à un tel pavé de poids réduit, on va pouvoir réaliser très aisément tout type de bordure, quelle que soit la forme à suivre.

Bien entendu, on pourrait envisager de traiter les surfaces visibles des pavés pour les rendre rétroréfléchissantes, améliorant ainsi la sécurité routière et piétonnière.

On notera encore que selon une caractéristique complémentaire de l'invention, la partie déformable du pavé se présentera de préférence sous la forme de soufflets propres à être mis sous tension pour donner au pavé la forme cintrée souhaitée.

Et selon une autre caractéristique, l'un des blocs du pavé pourra présenter latéralement, à son extrémité longitudinale libre, une large ouverture d'accès à une cavité intérieure du bloc correspondant, tandis qu'à l'extrémité opposée du pavé, l'autre bloc présentera alors de préférence une forme en tenon propre à s'emboîter dans l'ouverture de la cavité d'un pavé adjacent identique.

En outre, on prévoira avantageusement des moyens de maintien pour maintenir chaque pavé au sol dans une position déterminée, cintrée ou non.

Si elles sont appliquées, de telles caractéristiques présenteront deux avantages :
- tout d'abord, la mise en place des pavés sera beaucoup plus rapide qu'avec la méthode traditionnelle par scellement,
- et, une fois réalisées, les bordures conserveront la forme qui leur a été donnée, ceci malgré la relative légèreté des pavés élémentaires qui les constitue.

Bien entendu, si cela s'avérait nécessaire, il pourrait être envisagé de lester les pavés (de préférence après leur pose) afin d'améliorer encore leur stabilité.

Avant de décrire, comme ci-après, un mode de réalisation de l'invention en référence aux dessins d'accompagnement, on notera encore que l'invention se rapporte également à une bordure d'accotement telle que définie en revendications 9 et 10.

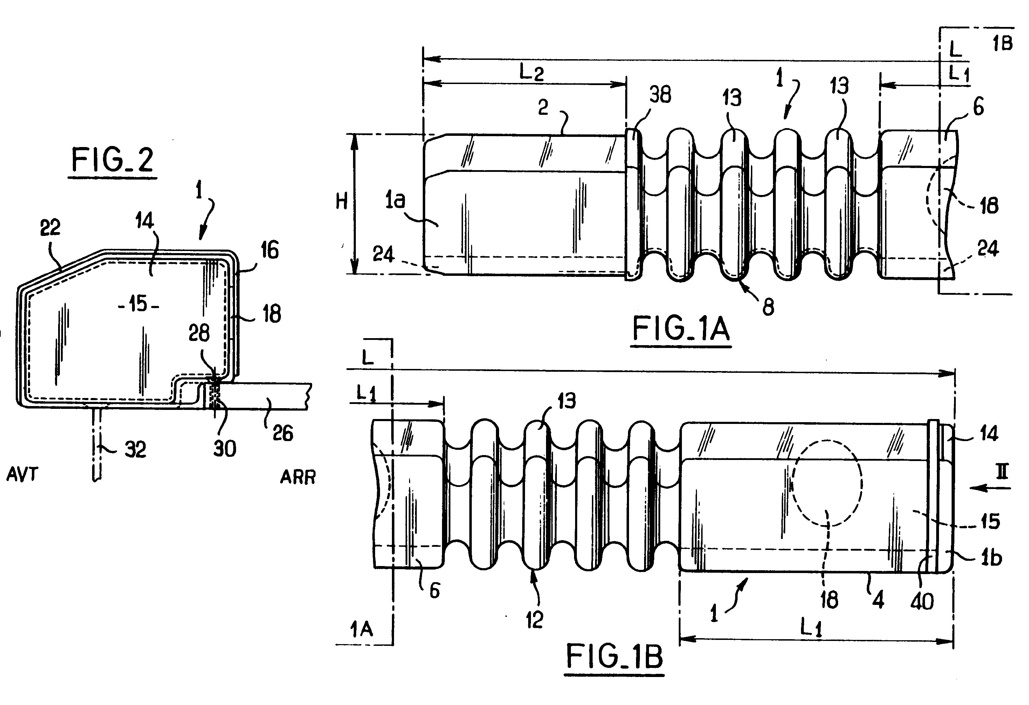

Sur les dessins joints :
la première figure, scindée en figures 1A et 1B, illustre en vue de face l'un des pavés élémentaires de l'invention,
la figure 2 montre en vue légèrement agrandie, outre le pavé dans le sens de la flèche II de la figure 1B, les moyens de fixation pouvant être utilisés pour d'une part maintenir le pavé au sol et d'autre part fixer ce même pavé à un revêtement de sol,
la figure 3 montre toujours le même pavé suivant une vue partielle de dessous,
et la figure 4 illustre, en vue de face et partiellement, trois pavés emboîtés les uns dans les autres pour constituer une partie de bordure.

Si l'on se reporte tout d'abord aux figures 1A et 1B, on voit donc illustré un pavé élémentaire 1 pour bordure d'accotement, réalisé par moulage en matière synthétique thermoplastique, telle que du polyéthylène moyenne densité associé à de l'E.V.A.(Ethyl Vynil Acétate) ou un mélange de polymère et d'élastomère thermoplastiques .

Le pavé 1 qui est de forme allongée comprend deux blocs d'extrémité 2, 4 de section polygonale situés vers les deux extrémités opposées 1a, 1b du pavé, ainsi qu'un bloc intermédiaire 6 également de section polygonale. Le bloc intermédiaire 6 est relié de part et d'autre aux blocs d'extrémité 2 et 4 par deux parties déformables 8, 12 formant zones de pliure possible en permettant de donner au pavé 1 une forme droite ou encore arquée ou cintrée, voire même éventuellement une forme "ondulée".

Comme cela est clairement illustré, les parties déformables, qui sont creuses comme d'ailleurs les différents blocs du pavé, se présentent sous la forme de soufflets 13 formant, en l'état hors tension du pavé, des plis sensiblement parallèles alors orientés sensiblement perpendiculairement à la direction générale dans laquelle s'étend le pavé.

Bien entendu, les plis en question peuvent être rapprochés d'un côté et écartés de l'autre, à la manière d'un accordéon, si l'on vient mettre sous tension le pavé, par exemple en exerçant sur les deux blocs d'extrémité 2, 4 une force tendant à les rapprocher suivant un plan sensiblement parallèle à la surface sur laquelle doit venir reposer ce même pavé.

Les caractéristiques dimensionnelles du pavé illustré (données à titre d'exemple non limitatif) sont les suivantes :
- longueur hors tout L = 120 cm environ,
- hauteur maximale par rapport à la surface sur laquelle repose le pavé, H = 15 cm environ,
- longueur L₁ des blocs 4 et 6 = 26 cm environ,
- longueur L₂ du bloc 2 formant tenon = 20 cm environ.

Dans la mesure où le pavé de l'invention est destiné, comme cela a été préalablement mentionné, à être utilisé en tant qu'élément de bordure, des moyens de liaison ont été prévus pour permettre de constituer une chaîne de pavés. On remarquera que compte-tenu des caractéristiques dimensionnelles fournies ci-dessus, une telle bordure pourra être réalisée avec un nombre de pavés réduit par rapport à celui qui aurait été nécessaire si on avait utilisé des pavés "classiques" en pierre ou béton.

Selon l'invention, la liaison des éléments est assurée par emboîtement partiel.

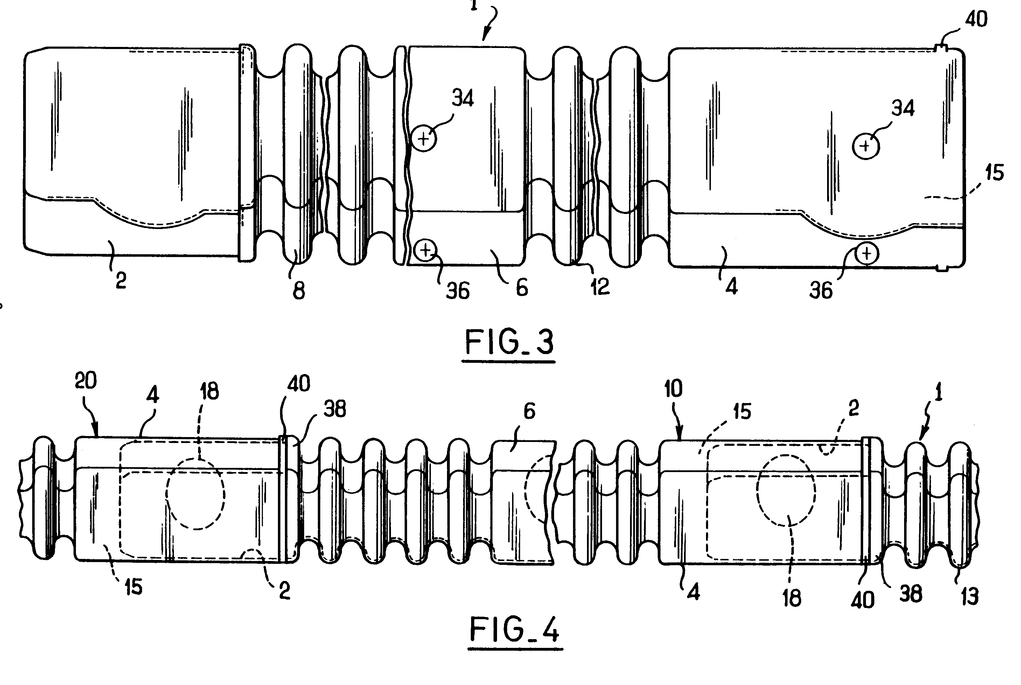

A cet effet, le bloc creux 4 situé vers l'extrémité 1b de chaque pavé présente dans sa face latérale libre une large ouverture 14 qui débouche à l'intérieur du bloc dans une cavité 15. En complément, le bloc 2 situé à l'autre extrémité 1a du pavé présente une longueur L₂ et des dimensions et une forme en section lui permettant de venir s'emboîter à la manière d'un tenon, à travers l'ouverture 14, à l'intérieur de la cavité 15 du bloc 4 d'un pavé identique coopérant et adjacent (tel que par exemple le pavé repéré 10 sur la figure 4).

En s'intéressant maintenant à la figure 2, on remarquera que dans la face latérale arrière 16 du bloc 4, et de préférence également du bloc intermédiaire 6, ont été ménagés des orifices 18 dont l'utilité apparaîtra ci-après. Par souci de clarté, on a repéré sur cette figure 2 par les lettres AVT et ARR les côtés respectivement avant et arrière du pavé illustré dont la forme en section des blocs apparaît clairement.

A ce sujet, on notera que vers leur angle supérieur avant, ces blocs présentent une face en pente 22 inclinée vers l'avant en formant une sorte de chanfrein, tandis que le long de leur angle inférieur arrière, ces mêmes blocs comportent un congé 24 s'étendant sensiblement parallèlement à la direction longitudinale du pavé.

Ce congé 24 est destiné à permettre l'engagement à son endroit d'un revêtement de sol 26, telle qu'une moquette que l'on pourrait étendre en surface de l'accotement à réaliser.

Pour fixer en position le revêtement 26 et le relier au pavé, on pourra utiliser tout type de moyens de liaison, tels que par exemple des vis 28 venant s'engager, par l'intérieur des blocs, chacune dans un orifice 30 ménagé à cet effet à travers le revêtement, du côté de son extrémité d'engagement.

Dans la mesure où les pavés sont relativement légers, il sera d'une façon générale nécessaire de prévoir également des moyens de maintien pour plaquer les pavés au sol sur lequel ces derniers viennent reposer lors de la réalisation de la bordure.

Ces moyens de maintien pourront consister en un lestage des pavés par un matériau de remplissage, tel par exemple de l'eau. Dans ce cas, il sera préférable de venir fermer chaque orifice 18 par un bouchon (non représenté). Il pourra également s'avérer alors utile de rendre étanche aux liquides le pavé aux endroits des vis 28.

On pourrait également envisager de venir fixer au sol le bloc d'extrémité 4 de chaque pavé, ainsi que de préférence le bloc intermédiaire 6, ceci par l'intermédiaire de tiges d'ancrage telles que 32 venant s'engager dans le sol par l'intérieur des blocs correspondants.

On aura compris que pour pouvoir manoeuvrer les moyens de fixation ou d'ancrage 28 et 32, il est nécessaire d'avoir accès à l'intérieur du bloc d'extrémité 4 ainsi que de préférence à l'intérieur du bloc intermédiaire 6. C'est dans ce but qu'ont été prévus les orifices 18.

Pour une bonne compréhension de la structure du pavé 1, celui-ci a été illustré en vue de dessous sur la figure 3, ce qui permet d'apercevoir les orifices 34, 36 qui ont en l'espèce été prévus sur les blocs 4 et 6 pour recevoir les moyens 28 et 32 de fixation ou d'ancrage du pavé au revêtement de sol et du pavé au sol, respectivement.

Reportons-nous maintenant à la figure 4 pour voir illustrés trois pavés élémentaires 1, 10 et 20 partiellement emboîtés les uns dans les autres pour constituer une partie de bordure.

Sur cette figure, on voit plus précisément que le bloc d'extrémité 2, formant tenon, du pavé 1 est emboîté sur sa longueur L₂ à l'intérieur de la cavité 15 du bloc 4 du pavé 10, tandis que le bloc opposé 2 de ce même pavé 10 est lui-même emboîté dans la cavité 15 d'un pavé 20.

En comparant notamment les figures 1 et 4, on remarquera que les blocs 2 formant tenon sont pourvus, à l'endroit de leur liaison avec la partie déformable adjacente 8, d'un collet de raccordement 38, tandis que les blocs 4 opposés sont, quant à eux, équipés, légèrement en retrait de leur extrémité libre, d'un autre collet 40 de telle sorte que lors de l'emboîtement des pavés, l'engagement des blocs 2 s'effectue jusqu'à ce que leur collet 38 vienne coopérer au contact du collet 40 du pavé coopérant, adjacent au premier cité (voir figure 4).

Bien entendu, d'autres modes de réalisation du pavé de l'invention auraient pu être envisagés.

En particulier, on aurait pu prévoir de réaliser les pavés avec seulement deux blocs d'extrémité (tels que 2 et 4) reliés entre-eux par une unique partie déformable (telle que 8 ou 12).

## Revendications

1. Pavé élémentaire en matière synthétique pour bordure d'accotement, telle en particulier qu'un trottoir ou un terre-plein, et destiné à venir reposer sur un sol, ledit pavé présentant une forme allongée et comportant au moins deux blocs (2, 4) situés chacun vers une de ses extrémités longitudinales (1a, 1b), lesdits blocs étant reliés entre-eux par au moins une partie déformable (8, 12) formée d'une seule pièce avec les blocs et constituant une zone possible de cintrage propre à donner à volonté au pavé une forme générale indifféremment rectiligne ou cintrée.

2. Pavé selon la revendication 1 caractérisé en ce que la partie déformable (8, 12) se présente sous la forme de soufflets (13) propres à être mis sous tension pour donner au pavé la forme cintrée souhaitée.

3. Pavé selon la revendication 1 ou la revendication 2 caractérisé en ce que l'un des blocs (4) présente latéralement, à son extrémité longitudinale libre, une large ouverture (14) d'accès à une cavité (15) intérieure du bloc, tandis qu'à l'extrémité opposée (la) du pavé, l'autre bloc présente une forme en tenon propre à s'emboîter dans l'ouverture de la cavité d'un pavé adjacent identique.

4. Pavé selon la revendication 3 caractérisé en ce que le bloc (2) terminé par la forme en tenon comporte, à l'endroit de sa liaison avec ladite partie déformable (8, 12), un collet (38) propre à venir coopérer avec un collet complémentaire (40) formé sur le bloc opposé (4) d'un pavé identique coopérant et adjacent, légèrement en retrait de son extrémité libre où est ménagée ladite ouverture (14).

5. Pavé selon l'une quelconque des revendications précédentes caractérisé en ce que les blocs (2, 4, 6) qui ont une section polygonale, présentent le long de leur angle inférieur arrière un congé (24) permettant l'engagement à cet endroit d'un revêtement de sol (26) tel qu'une moquette, des moyens de liaison (28, 30, 36) étant prévus pour solidariser les blocs du pavé (1) et ledit revêtement.

6. Pavé selon l'une quelconque des revendications 3 à 5 caractérisé en ce qu'il comprend, formés d'une seule pièce :
- deux dits blocs d'extrémité (2, 4) se terminant l'un (4) par ladite cavité avec son ouverture latérale d'accès (14) et l'autre (5) par ladite forme en tenon,
- un bloc intermédiaire (6) central, dépourvu desdites ouvertures et forme en tenon,
- et deux parties déformables (8, 12) reliant chacune l'un des blocs d'extrémité (2, 4) audit bloc intermédiaire (6).

7. Pavé selon l'une quelconque des revendications précédentes caractérisé en ce qu'il comprend des tiges de fixation (32) venant ancrer au sol au moins le bloc d'extrémité (4) du pavé dans lequel est ménagée ladite ouverture (14, 15), et un orifice (18) est formé au moins dans ce même bloc d'extrémité (4) pour permettre le passage d'un outil de manoeuvre desdites tiges de fixation (32).

8. Pavé selon l'une quelconque des revendications précédentes caractérisé en ce que la (les) dite(s) partie(s) déformable(s) (8, 12) et/ou lesdits blocs (2, 4, 6) sont creux intérieurement, ces derniers présentant une forme polygonale.

9. Bordure d'accotement, en particulier pour trottoir ou terre-plein, comprenant une succession de pavés selon l'une quelconque des revendications précédentes, lesdits pavés étant partiellement emboîtés les uns dans les autres pour former ladite bordure, chaque pavé étant réalisé en matière plastique, telle tout particulièrement que du polyéthylène associé à de l'éthyl vynil acétate ou un mélange de polymère et d'élastomère thermoplastiques.

10. Bordure selon la revendication 9 caractérisé en ce que l'emboîtement partiel desdits pavés les uns dans les autres est assuré par engagement de la forme en tenon du bloc correspondant (5) de l'un des pavés dans la cavité (15) du bloc d'un autre pavé adjacent.

## Patentansprüche

1. Pflaster(stein)element aus Kunststoffmaterial zur Randstreifeneinfassung wie insbesondere von Gehwegen oder Straßenteilen/Mittelstreifen und zur Lagerung auf einem Untergrund, wobei der Pflasterstein eine langgestreckte Form aufweist und mindestens zwei Blöcke (2, 4) umfaßt, die jeweils an einem seiner Längsenden (1a, 1b) angeordnet und miteinander durch mindestens einen verformbaren Abschnitt (8, 12) verbunden sind, der mit den Blöcken einstückig ausgebildet ist und eine biegbare Zone bildet, die geeignet ist, dem Pflasterstein je nach Wunsch eine entweder geradlinige oder gekrümmte allgemeine Form zu geben.

2. Pflasterstein nach Anspruch 1, dadurch gekennzeichnet, daß der verformbare Teil (8, 12) die Form von Bälgen (13) aufweist, die geeignet sind, unter Spannung gesetzt zu werden, um dem Pflasterstein die gewünschte gekrümmte Form zu geben.

3. Pflasterstein nach Anspruch 1 oder Anspruch 2, dadurch gekennnzeichnet, daß einer der Blöcke (4) seitlich an seinem freien Längsende eine große Zugangsöffnung (14) zu einem Innenhohlraum (15) des Blocks aufweist, während am gegenüberliegenden Ende (1a) des Pflastersteins der andere Block eine Zapfenform aufweist, die geeignet ist, sich in die Öffnung des Hohlraums eines identischen benachbarten Pflastersteins einzulagern.

4. Pflasterstein nach Anspruch 3, dadurch gekennzeichnet, daß der in Zapfenform endende Block (2) an seiner Verbindungsstelle mit dem verformbaren Abschnitt (8, 12) einen Kragen (38) aufweist, der zum Zusammenwirken mit einem Komplementärkragen (40) geeignet ist, der an dem gegenüberliegenden Block (4) eines zusammenwirkenden identischen und benachbarten Pflastersteins und etwas von seinem freien Ende, zurückspringend in dem besagte Öffnung (14) angeordnet ist, ausgebildet ist.

5. Pflasterstein nach einem der vorhergehenden Ansprüche, dadurch gekennzeichnet, daß die einen polygonalen Querschnitt aufweisenden Blöcke (2, 4, 6) entlang ihrer unteren hinteren Kante eine Kehle (24) aufweisen, die an dieser Stelle die Verbindung mit einem Bodenbelag (26), zum Beispiel einem Textilbelag, ermöglicht, wobei Verbindungsmittel (28, 30, 36) vorgesehen sind, um die Blöcke des Pflastersteins (1) und besagten Belag zu vereinigen.

6. Pflasterstein nach einem der Ansprüche 3 bis 5, dadurch gekennzeichnet, daß er, einstückig ausgebildet,
- zwei solcher Endblöcke (2, 4), von denen einer (4) mit dem Hohlraum mit seiner seitlichen Zugangsöffnung (14) und der andere (5) mit der besagten Zapfenform endet,
- einen zentralen Zwischenblock (6) ohne solche Öffnungen und Zapfenform,
- und zwei verformbare Abschnitte (8, 12), die jeweils einen der Endblöcke (2, 4) mit dem Zwischenblock (6) verbinden,
umfaßt.

7. Pflasterstein nach einem der vorhergehenden Ansprüche, dadurch gekennzeichnet, daß er Befestigungsstangen (32) umfaßt, die mindestens den Pflasterstein-Endblock (4), in dem die Öffnung (14, 15) angeordnet ist, im Boden verankern, und eine Öffnung (18) mindestens in dem gleichen Endblock (4) ausgebildet ist, um den Durchgang eines Betätigungswerkzeuges für die Befestigungsstangen (32) zu ermöglichen.

8. Pflasterstein nach einem der vorhergehenden Ansprüche, dadurch gekennzeichnet, daß der (die) verformbare(n) Abschnitt(e) (8, 12) und/oder die Blöcke (2, 4, 6) innen hohl sind, wobei letztere eine polygonale Form aufweisen.

9. Randstreifeneinfassung, insbesondere für einen Gehweg oder einen Mittelstreifen, umfassend eine Folge von Pflastersteinen gemäß einem der vorhergehenden Ansprüche, wobei die Pflastersteine teilweise einer in den anderen eingefügt sind, um die Einfassung zu bilden, wobei jeder Pflasterstein aus Kunststoffmaterial ausgebildet ist, und zwar insbesondere aus mit Äthylvinylazetat verbundenem Polyäthylen oder einer Mischung thermoplastischer Polymere und Elastomere.

10. Einfassung nach Anspruch 9, dadurch gekennzeichnet, daß die teilweise Verschachtelung der Pflastersteine ineinander durch Eingriff der Zapfenform des entsprechenden Blocks (5) eines der Pflastersteine in den Hohlraum (15) des Blocks eines anderen benachbarten Pflastersteins gewährleistet ist.

## Claims

1. A paving element of synthetic plastics material for edging a sidewalk, such as in particular a pavement or a road divider, and intended to rest on earth, the said paving element being of elongate form and comprising at least two blocks (2, 4) each situated towards one of its longitudinal ends (1a, 1b) the said blocks being connected inter se by at least one deformable part (8, 12) formed in a single piece with the blocks and constituting a possible flexion zone adapted to give the paving element any desired general form, indiscriminately rectilinear or curved.

2. A paving element according to Claim 1, characterised in that the deformable part (8, 12) takes the form of bellows (13) adapted to be placed under stress in order to give the paving the desired curved form.

3. A paving element according to Claim 1 or 2, characterised in that one of the blocks (4) has laterally, at its free longitudinal end, a wide aperture (14) offering access to a cavity (15) inside the block, while at the opposite end (1a) of the paving element the other block is shaped like a tenon adapted to fit into the aperture in the cavity in an identical adjacent paving element.

4. A paving element according to Claim 3, characterised in that the block (2) which ends in the tenon shape has at the place where it is connected to the said deformable part (8, 12) a collar (38) adapted to cooperate with a matching collar (40) formed on the opposite block (4) of an identical cooperating and adjacent paving element which is slightly set back from its free end in which the said aperture (14) is disposed.

5. A paving element according to any one of the preceding Claims, characterised in that the blocks (2, 4, 6) which are of polygonal cross-section have along their lower rear edge a fillet (24) which allows at this location engagement of a floor covering (26) such as a carpet, connecting means (28, 30, 36) being provided in order to fix together the paving blocks (1) and the said floor covering.

6. A paving element according to any one of Claims 3 to 5, characterised in that it comprises, formed in a single piece:
- two said end blocks (2, 4) one (4) terminating in the said cavity with its lateral access aperture (14) while the other (5) ends in the said tenon shape,
- a central intermediate block (6) bereft of the said apertures and tenon shape,
- and two deformable parts (8, 12) each connecting one of the end blocks (2, 4) to the said intermediate block (6).

7. A paving element according to any one of the preceding Claims, characterised in that it comprises fixing rods (32) for anchoring to the ground at least the end block (4) of the paving element in which the said aperture (14, 15) is disposed and in that an orifice (18) is formed at least in this same end block (4) to allow passage of a tool for operating the said fixing rods (32).

8. A paving element according to any one of the preceding Claims, characterised in that the said deformable part(s) (8, 12) and/or the said blocks (2, 4, 6) are hollow on the inside, these latter having a polygonal shape.

9. A sidewalk edging, particularly for a pavement or road divider, comprising a succession of paving elements according to any one of the preceding Claims, the said paving elements being in particular fitted into one another to form the said edging, each paving element being constructed from plastics material such as most particularly polyethylene associated with an ethyl vinyl acetate or a mixture of polymer and thermoplastics elastomer.

10. An edging according to Claim 9, characterised in that the partial inserted fitment of the said paving elements into one another is ensured by engagement of the tenon shape of the corresponding block (5) of one of the paving elements into the cavity (15) in another adjacent paving element.
